(19) Europäisches Patentamt
European Patent Office
Office européen des brevets

(11) Publication number: 0 421 137 A1

(12) # EUROPEAN PATENT APPLICATION

(21) Application number: 90117066.2

(22) Date of filing: 05.09.90

(51) Int. Cl.5: B01D 71/66, B01D 53/22, //C08G75/02

(30) Priority: 05.09.89 US 402736

(43) Date of publication of application: 10.04.91 Bulletin 91/15

(84) Designated Contracting States: AT BE CH DE ES FR GB IT LI NL

(71) Applicant: PHILLIPS PETROLEUM COMPANY
5th and Keeler
Bartlesville Oklahoma 74004(US)

(72) Inventor: Mueller, Francis X., Jr.
2608 SE Quail Place
Bartlesville, OK 74006(US)
Inventor: Burkinshaw, Jeffrey E.
4725 Barlow Place
Bartlesville, OK 74006(US)

(74) Representative: Dost, Wolfgang, Dr.rer.nat.,Dipl.-Chem. et al
Patent- & Rechtsanwälte Bardehle . Pagenberg . Dost . Altenburg . Frohwitter . Geissler & Partner Galileiplatz 1 Postfach 86 06 20
W-8000 München 86(DE)

(54) **Gas separation membrane and process.**

(57) A process and membrane are disclosed for gas separation wherein the membrane is formed from a poly arylene sulfide sulfone having particularly desirable chemical and temperature resistance.

EP 0 421 137 A1

# GAS SEPARATION MEMBRANE AND PROCESS

## Field of the Invention

This invention relates to semi-permeable membranes. One aspect of this invention relates to the preparation of semi-pereable membranes comprised of poly(arylene sulfide sulfone) units. Another aspect of this invention relates to the use of such membranes in selectively separating at least one gas from a gaseous mixture by permeation, such as separating $CO_2$ from a gaseous mixture containing $CO_2$ and $CH_4$.

## Background of the Invention

Using membranes that are capable of selectively permeating one component of a gaseous mixture as a means for achieving gas separations is well known in the art. The membrane material separates gas components by exhibiting selective permeation of one gas over that of one or more remaining gases in the mixture. The membranes ability to separate a specific mixture of gases into enriched fractions is quantified in terms of the permeability of that membrane for a particular gas and the selectivity (separation factor) for one component in a mixture over the other. The permeability signifies the amount or volume of gas passing through the membrane, whereas the selectivity of a membrane determines purity of the enriched fractions. (Generally a highly permeable membrane is less selective and vice versa).

Polysulfone is commonly used as a membrane material for separating carbon dioxide and methane from a gaseous mixture. See , Encyclopedia of Polymer Science and Engineering, 2nd Ed. Vol. 13 p. 210. The prior art shows that amorphous polymers are better suited for permeation of gaseous components than crystalline polymers, however they lack the chemical resistance and thermal stability needed for gaseous separations in harsh environments. The best commercial membranes are adversely affected by certain chemicals such as toluene, ethyl acetate, methyl ethyl ketone, methanol, butylamine, and glacial acetic acid. An important application for $CO_2/CH_4$ separations is the removal of carbon dioxide from natural gas. A membrane capable of producing enriched fractions of $CO_2$ and $CH_4$ in thermally or chemically hostile environments can be very useful in these applications.

The overall permeation rate of a separation membrane system can be increased. Several inventions to increase permeation rate or volume of gas separated by a membrane system of a specific volume have become commercially useful. For example, rather than having one thin membrane comprising the separation device, many hollow fibers of the membrane material can be placed within the same volume. This increases the surface area to volume ratio of the membrane system, so that the overall permeation rate or volume of gas separated is much higher. Asymmetric membranes also increase overall permeation rate whereby a thin active layer of highly selective membrane material is supported by a thicker porous layer. The thin layer has a higher permeation rate while maintaining its selective nature and the thick layer prevents destruction of the thin membrane by pressure or temperature. Selectivity is solely dependent upon the membrane material itself. Generally, the prior art can achieve fairly pure components, having a reasonable selectivity at optimum conditions. However, for a low $CO_2$ containing residual gas, a very high selectivity is required and this necessarily involves multiple stages of compression and separation.

It is an object of this invention to provide a semi-pereable membrane useful in separating $CO_2$ and light hydrocarbon fractions from a gaseous mixture.

It is another object of this invention to provide a semi-permeable membrane for $CO_2/CH_4$ gaseous separations which has good selectivity for $CO_2$ over $CH_4$.

It is also an object of this invention to provide a semi-permeable membrane for $CO_2/CH_4$ gaseous separations that has high thermal stability.

It is yet another object of this invention to provide a semi-permeable membrane for $CO_2/CH_4$ gaseous separations which has good chemical resistance.

## SUMMARY OF THE INVENTION

The present invention relates to a semi-permeable membrane that is useful for separating gaseous

mixtures. The membrane is formed from a poly(arylene sulfide sulfone) polymer that contains repeating units of the formula

{S-Ar-$SO_2$-Ar}

Formula I

wherein each Ar is an arylene radial containing 6 to 22 carbon atoms, more generally 6 to 12 carbon atoms. The currently preferred polymer for repeating unit of the formula

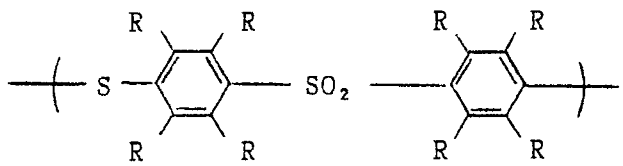

wherein each R is selected from the group consisting of hydrogen and alkyl radicals having 1 to about 4 carbon atoms, the total number of carbon atoms in each repeating unit being within the range of twelve to about 24. Material of this type can be formed into a membrane that has a high selectivity for $CO_2$ over $CH_4$. One method for forming polymers saving such repeating units is disclosed in U.S. 4,008,203, the disclosure of which is incorporated herein by reference. Preferred methods for preparation of such polymers have been previously disclosed in Campbell (U.S. 4,301,274) and Bobsein (U.S. 4,774,276), the disclosures of which are incorporated herein by reference.

The separation is performed by contacting one face of the membrane with a gaseous mixture. The gas is under pressure when contacted with the membrane. For example, when the gas contains $CO_2$ and methane, the $CO_2$, having a higher permeation rate for the membrane material, dissolves on the high pressure face of the membrane, diffuses across the membrane, and desorbs on the low pressure side. Methane having a lower solubility in the membrane material remains in its gaseous state and exits the compartment without permeating through the membrane. Two gas fractions are formed, one being that of enriched $CO_2$ which permeated through the membrane exiting from the low pressure side of the membrane, and the other being the enriched methane which did not permeate the membrane.

## Detailed Description of the Invention

The membrane of this invention is formed from a polymer having repeating units of formula 1. Preferably the membrane will be formed from a polymer that contains a preponderance of said repeating units, whereby preponderance means at least 50 wt.% of the polymer. The other units can be of essentially any structure that does not prevent the polymer from being fabricated into a membrane useful for separating gaseous mixtures. These other units may impart specific properties to the polymer that will eventually be manifested in the membrane. Preferably, the polymers used to form the membrane of this invention will not contain a significant amount of any units other than the arylene units of formula I, most preferably the polymer used would contain only the repeating units of formula 1 unless imparting another unit provides particular advantage in the environment in which the membrane is exposed.

Solution blending the polyarylene sulfide sulfone polymer with other polymers can produce a polymer with a better balance of polymer properties for certain conditions. Permeability can be increased by blending poly(phenylene sulfide sulfone) with brominated poly(phenylene oxide). Blends can be used to retain, for example, some chemical resistance yet increase permeability for certain gas components.

The polymer used in forming the separation membrane can be prepared by contacting a dihalo arctic sulfone, an alkali metal sulfide, and an organic amide under polymerization conditions that are sufficient to cause the reactants to react and form said polymer. Preferably the dihalo aromatic sulfone used is bis(p-chlorophenyl) sulfone, the alkali metal sulfide is sodium sulfide and the organic amide is N-methyl-2-pyrrolidone. An alkali metal carboxylate such as sodium acetate can be employed with the initial ingredients of the polymerization process. Usage of an alkali metal carboxylate generally results in an aromatic sulfide/sulfone polymer of higher molecular weight (as evidenced by higher inherent viscosity) than polymers prepared in it's absence. The preferred ratio and other specifics for such a preparation of the material are as set forth in the aforementioned Campbell patent (4,301,274).

The reaction temperature at which such a polymerization is conducted is generally within the range of

170 °C to about 240 °C, preferably about 180 °C to about 220 °C. The reaction time may vary, depending on the temperature, but is generally in the range of 10 minutes to about 3 days, preferably about 1 hour to about 8 hours. The pressure should be sufficient to maintain the dihaloaromatic sulfone and organic amide substantially in the liquid phase.

The polymer of this invention has an average molecular weight generally less than about 500,000 and is frequently less than about 100,000. The average molecular is generally greater the 10,000.

The aromatic sulfide/sulfone polymer produced by this process can be separated from the reaction mixture by conventional procedures, e.g., by filtration of the polymer, followed by washing with water, or by dilution of the reaction mixture with water followed by filtration and water washing of the polymer. Preferably, at least a portion of the washing with water is conducted at elevated temperatures within the range of 130 °C to about 250 °C, preferably about 160 °C to about 230 °C. For a polymer with a stabler melt flow, the polymer can be washed with an aqueous zinc solution as described in the aforementioned Bobsein patent (U.S. 4,774,276).

The polymer produced by such processes has outstanding thermal stability and chemical resistance. The polymer can be cured through cross linking to further improve thermal stability and chemical resistance. For purposes of preparing a thin semi-permeable membrane, the polymer is preferably left in its amorphous (uncrosslinked) form to allow better permeation. In its amorphous state, poly-para-phenylene sulfide sulfone (PPSS) has greater chemical resistance than other amorphous polymers. The PPSS polymer retains good retention of mechanical properties up to about 350 °F.

The semipermeable membrane can be manufactured by any conventional method. In one embodiment, the polymer is dissolved in a suitable solvent to form a solution containing about 2 to about 20, more preferably a 4 to 15, weight percent polymer. An exemplary solvent is N-methyl-2 pyrrolidone (NMP), though any suitable solvent can be used. The solution is placed in a spin casting apparatus, whereby a thin membrane is spun from solution. The solvent is pulled off by vacuum leaving a bubble free film of the polymer. These membranes can be manufactured by the various laboratory and commercial techniques known in the art. These membranes can also be manufactured in structures other than films, such as hollow fibers.

The membranes of this invention can be cast at any desirable thickness although membranes having a thickness between 25 mils (1 mil equals 25 micrometers) and 1000 angstroms, preferably between 10 mils and 1000 angstroms, demonstrate good balance of permeation rate, durability, flexibility, strength and chemical resistance.

In $CO_2$ separation the gas permeability as well as sorption is enhanced by exposing the polymer to high $CO_2$ pressures prior to actual use in separation. This is called $CO_2$ vectoring where one side of the film is exposed to high gas pressure prior to being contacted with the gas mixture from which the $CO_2$ is to be separated.

The semi-permeable membranes of this invention find particular utility for separation of gaseous mixtures containing carbon dioxide and methane. However, these membranes have utility for separating components from other gaseous mixtures such as those containing hydrogen, nitrogen, helium, and the like. Membranes are also useful for separating components from liquid mixtures such as salt water. The membrane can be used in any one of a number of different manners including reverse osmosis, microfiltration, and pervaporation.

## Specific Embodiments

### Polymer Preparation

The polymers used in forming the membrane in the following examples consisted essentially of para-phenylene-sulfide-sulfone units. The polymer will be referred to hereinafter as PPSS. A typical polymerization process involved contacting sodium sulfide (4mol), sodium acetate (4mol), N-methyl-2-pyrrolidone (NMP) (16 mol) and bis(p-chlorophenyl)sulfone (4mol) in a polymerization reactor. The sealed autoclave was purged with nitrogen (4 times). It was heated at 200 °C for three hours and stirred at a rate of 600 rpm. The vessel was then quenched by pumping a mixture of $H_2O$ and NMP (200ml/1200ml) into the reactor. The heat was stopped and reactor cooled overnight. The polymer was then recovered by filtration and given a hot deionized water wash, filtered, and dried (150 °C for over 18 hours).

The melt flow of the polymer was measured at 343 °C using a 5kg weight with a short orifice on the

melt flow apparatus. The "cut and weigh" method was used. The melt flow of the PPSS polymer used in forming the membrane in the following examples was generally about 5 g/10 minutes.

## Membrane Preparation

The membranes used in the following examples were spun-cast from solution to form films. The polymer material was dissolved in N-methyl-2 pyrrolidone (NMP) to form a five weight percent solution of the poly(phenyl sulfide sulfone) in NMP. A cylindrical spin casting apparatus was used, whereby the solution was placed in a cylinder which was spun to cast the polymer into a film out of solution. A vacuum pulled the solvent off leaving a thin bubble-free film of polymer in solution. The film was cast at 110°C to produce a film of 1 to 4 mils thick.

## Permeability apparatus and procedure

Prior to the permeability tests one side of the membrane was exposed to high $CO_2$ pressures ($CO_2$ vectoring).

The manometric approach was used to measure the permeation rate of the gas through the membrane. The membrane was placed in a cell where a pressure feed line enters the apparatus to contact one side of the membrane. Gas permeation was monitored by recording the pressure rise in the calibrated and evacuated volume as a function of time. The permeation cell rests in an aluminium block that can be thermostated electrically or by circulating fluid. The time lag was measured by setting initial downstream penetrant concentration at zero and the upstream concentration was assumed to be instantaneously established at equilibrium value.

The equipment was modified to obtain mixed gas data. The flow through cell was designed to ensure a constant feed ratio. The stainless steel gas sampling cylinders were employed to obtain samples once steady state conditions were attained. Gas samples from the feed, permeate, and residue streams were analyzed for methane and $CO_2$ using gas chromatography with thermal conductivity detection.

High purity gases from Matheson Gas Products were used with in-line Matheson Model 450 gas driers. The mixed feed was a custom gas mixture of methane and carbon dioxide obtained from Linde Division of Union Carbide. The composition was verified by gas chromatography.

## Example 1

This example illustrates the correlation between the $CO_2/CH_4$ ideal separation factor and the $CO_2/CH_4$ real separation factor when utilizing the PPSS membrane for separation. Pure gas samples of $CO_2$ and $CH_4$ were each fed into contact with the PPSS membrane at various pressures. The permeation rate of both $CO_2$ and $CH_4$ through the membrane was measured. The ideal separation factor is the ratio of the observed permeability of each gas for the membrane i.e. permeability of pure $CO_2$/permeability of $CH_4$. The results are contained in Table I, part A.

Mixed gas samples containing $CO_2$ and $CH_4$ were then fed into contact with the PPSS membrane at various pressures. The total gas permeation rate and separate permeability of each gas was measured. The real separation factor is a fraction of the permeation rate of $CO_2$ and $CH_4$ through the membrane. The results are contained in Table I, part B.

TABLE I

| Ideal Separation Factor v Real Separation Factor (a) | | | | | | |
|---|---|---|---|---|---|---|
| A. Pure Gases 35° C | | | | | | |
| Feed Pressure | Permeability (Barrer) | | Ideal Sep. Factor | | | |
| (psia) | $CO_2$ | $CH_4$ | $PCO_2/PCH_4$ | | | |
| 15.0 | 0.975 | 0.034 | 28.7 | | | |
| 150.0 | 0.870 | 0.028 | 31.1 | | | |
| 300.0 | 0.810 | 0.027 | 30.0 | | | |
| B. Mixed Gases 35° C | | | | | | |
| Feed Pressure (psia)(b) | | | Permeability (Barrer) | | | Separation Factor |
| Total | $CO_2$ | $CH_4$ | Total | $CO_2$ | $CH_4$ | $PCO_2/PCH_4$ |
| 30.9 | 16.0 | 14.9 | 0.529 | 1.00 | 0.023 | 43.5 |
| 310.7 | 160.9 | 149.8 | 0.434 | 0.814 | 0.025 | 32.6 |
| 601.6 | 311.9 | 290.0 | 0.387 | 0.724 | 0.024 | 29.0 |

(a) PPSS Film (2.6 mils), Vectored w.$CO_2$.
(b) Feed contained 48.2 mole % methane and 51.8 mole % carbon dioxide.

The results indicate that the ideal separation factor calculated from permeability measurements of pure gases correlates well with the actual permeability of the gases when they are separated from a mixture. The real separation factor at a total pressure of 30.9 psia is considerably higher than that of the ideal separation factor for the pure gases at 15.0 psia. Note that this result is considered to be due to the fact that the permeability of $CO_2$ is higher and that of $CH_4$ lower in the mixed gas than when measured as pure gases. Although we do not want to be bound by the theory, it appears that part of the difference may be due to higher % of $CO_2$ in the mixture and resulting higher $CO_2$ pressure.

## Example 2

This example illustrates the $CO_2/CH_4$ permeability and separation factor for PPSS as compared to that of a current commercial membrane material used for $CO_2/CH_4$ gaseous separations. Bisphenol A type polysulfone (Udel P1700), a product sold by Amoco Performance Products, Inc. was spun-cast from NMP into a thin membrane for the permeability tests. Permeability was measured using gaseous mixtures containing $CO_2$ and $CH_4$. The runs for both Udel and PPSS were made at various feed pressures. The results are set forth below in Table II.

TABLE II

| Mixed Gas Permeability and Separation Factor | | | | | |
|---|---|---|---|---|---|
| | | Permeability (Barrer) | | | Sep. Factor |
| Ex. | Feed Pressure (psia) | Total | $CH_2$ | $CO_2$ | $PCO_2/PCH_4$ |
| 1[A] (a) | 30.4 | 0.831 | 0.060 | 1.50 | 25.0 |
| (b) | 304.4 | 0.685 | 0.045 | 1.24 | 27.6 |
| (c) | 598.8 | 0.596 | 0.044 | 1.08 | 24.5 |
| 2[B] (a) | 33.4 | 0.495 | 0.021 | 0.936 | 44.6 |
| (b) | 303.1 | 0.407 | 0.021 | 0.766 | 36.5 |
| (c) | 600.7 | 0.354 | 0.019 | 0.666 | 35.0 |
| Feed Composition: 46.5% $CH_4$ 53.5% $CO_2$ | | | | | |

A. Polysulfone P1700 Spun-Cast from NMP (3.5 mils)
B. PPSS Spun-Cast from NMP (2.4 mils)

The difference in membrane thickness is taken into account in the unit barrer which is a unit of

$$\text{permeability} = \frac{(\text{amt. gas})(\text{film thickness})}{(\text{film area})(\text{time})(\text{driving pressure})}$$

The data in Table II shows that the separation factor is higher for PPSS than for the Bisphenol A type polysulfone.

## Example 3

This example illustrates the effect that temperature has on the permeability and separation factor of the PPSS membrane. The permeability was measured from $CO_2/CH_4$ gaseous mixture at various temperatures. The results are shown below in Table III.

TABLE III

| Mixed Gas Permeability at Various Temperatures | | | | | |
|---|---|---|---|---|---|
| | | Perm. (Barrer) | | | Sep. Factor |
| Ex. | Temp. (C) | Total | $CO_2$ | $CH_4$ | $PCO_2/PCH_4$ |
| 1 | 0 | 0.146 | 0.278 | 0.0043 | 64.6 |
| 2 | 35 | 0.387 | 0.724 | 0.024 | 29.0 |
| 3 | 70 | 0.780 | 1.43 | 0.080 | 17.9 |
| 4 | 90 | 1.15 | 2.07 | 0.154 | 13.4 |
| 5 | 110 | 1.64 | 2.91 | 0.280 | 10.4 |
| Total Pressure = 600 psia<br>Feed: 51.8 mole % $CO_2$ + 48.2 mole % $CH_4$<br>Note: PPSS Film (2.6 mils) Vectored 850 psig $CO_2$ | | | | | |

The permeability increases and the separation factor decreases as the temperature increases. Note that at higher temperatures PPSS would be highly permeable and selective.

## Example 4

Poly(-para-phenylene sulfide sulfone) (PPSS) was blended in 50/50 combinations with polymers having high gas permeabilities. A solution approach was adopted which involved finding a suitable solvent for both polymers in the blend, spin-casting a film from the resulting solution, and then measuring permeabilities. Several solvents were tested that dissolve PPSS at elevated temperatures, and N-methyl-2-pyrrolidone was found to be the most effective for forming solution blends with poly(phenylene oxide) (PPO), poly(ether sulfone) (PES) and polysulfone. The PPSS/polysulfone film was cloudy, and DSC testing indicated that these two polymers are not very miscible (50/50 blend contains two Tg's). It was not possible to determine if miscible blends were formed with PPO or PES because glass transition temperatures of the individaul polymers are too similar.

Solution blending of PPSS with PPO or polysulfone did not produce permeability results in-between the two polymers; the 50/50 blends gave permeability values for helium, nitrogen, carbon dioxide, and methane which are close to readings obtained for PPSS alone. Highest increases in permeability were found with the blend containing brominated poly(phenylene oxide), BPPO. Low pressure helium permeability for the PPSS/BPPO blend is 5.9 Barrer as compared to 2.0 Barrer for PPSS and 10.2 Barrer for BPPO.

## Example 5

This example illustrates the chemical resistance of poly(para-phenylene sulfide sulfone). This example serves to illustrate the resistance of PPSS as compared with other polymers commercially used in gaseous separations. The PPSS polymer used in this example was prepared pursuant to the afore mentioned Campbell procedure (U.S. 4,301,274). The PPSS used in these runs was amorphous (not crosslinked) and had an I.V. of .45 which is comparable to the polymers used in preparing the separation membrane for permeability testing.

Bisphenol A polysulfone (Udel P1700), a product sold by Amoco Performance Products, Inc., is commonly used for membrane separations. This polymer is believed to have the repeating unit:

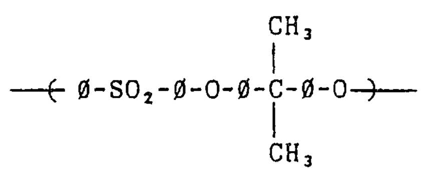

wherein Ø represents a phenylene radial.

Polyethersulfone (Victrex PES), a product sold by ICI Americas, Inc., is also useful in membrane separations generally where additional heat and solvent resistance are needed. It is believed to have the repeating unit:

(Ø-$SO_2$-Ø-O)

Several identical dimensional specimens of each polymer type were placed in an aging cylinder filled with the chemical. The cylinders were then sealed and placed in an oil bath at 200° F. The elevated temperature aids in accelerating the chemical aging effect on the polymers. Three specimens were removed after 2 weeks and the cylinders were resealed and returned to the oil bath. The removed specimens were rinsed with water. The following morning the specimens were weighed, measured dimensionally, and tensile tested pursuant to 4ASTM D638. The data for the three specimens was averaged and compared with data obtained from unaged control specimens. The tensile strength retention results are contained in Table IV.

TABLE IV

| Tensile Strength Retention (%) of Original Polymer | | | | |
|---|---|---|---|---|
| Weeks Aged | Chemical | Udel | PPSS | PES |
| 2 | Toluene | --- | 78.7 | --- |
| 8 | | --- | 50.0 | --- |
| 2 | Cyclohexane | 103.0 | 102.0 | 101.0 |
| 8 | | 100.8 | 102.8 | 103.2 |
| 2 | Methyl Ethyl Ketone | 110.0 | 60.0 | --- |
| 8 | | 110.3 | 42.4 | --- |
| 2 | Ethyl Acetate | --- | 96.2 | --- |
| 8 | | --- | 67.7 | --- |
| 2 | Methanol | --- | 87.8 | 97.9 |
| 8 | | --- | 54.0 | 57.8 |
| 2 | Butylamine 99% | --- | 79.4 | --- |
| 8 | | --- | --- | --- |
| 2 | Glacial Acetic Acid | --- | 92.2 | 18.6 |
| 8 | | --- | 97.6 | --- |
| 2 | 15% Phosphoric Acid | 105.0 | 103.0 | 73.6 |
| 8 | | 102.8 | 96.4 | 73.9 |
| 2 | 15% Sodium Hydroxide | 106.0 | 104.0 | 106.0 |
| 8 | | 102.8 | 99.0 | 105.5 |
| --- Samples were dissolved in chemical | | | | |

PPSS retained over 50% of it's tensile strength in Toluene, ethyl acetate, methanol, and glacial acetic acid, whereas these solvents destroyed Udel completely and with the exception of methanol, severely attacked PES.

While the present invention has now been described in general terms and illustrated by some specific examples, it should be recognized that many modifications and variations can be made without departion from the spirit and scope of the invention.

## Claims

1. A semi-permeable membrane useful for separating $CO_2$ from a gaseous mixture containing $CO_2$ and CH formed from at least one polysulfide sulfone polymer consisting essentially of repeating units of the formula
$\{S\text{-}Ar\text{-}SO_2\text{-}Ar\}$
wherein each Ar is an arylene radial containing 6 to 24 carbon atoms.
2. A membrane according to claim 1 where the membrane is formed from at least one polysulfide sulfone polymer containing a preponderance of said repeating units.
3. A membrane according to claim 1 where the membrane is formed from at least one polymer produced by contacting a dihaloaromatic sulfone, an alkali metal sulfide, and an organic amide under suitable polymerization conditions.
4. A membrane according to claim 3 where said dihaloaromatic sulfone is bis(p-chlorophenyl)sulfone, said alkali metal sulfide is sodium sulfide, and where said organic amide is N-methyl-2-pyrrolidone.
5. A membrane according to claim 4 where the polymerization temperature ranges from about 170-240 °C for a period of time sufficient to form said polymer.
6. A membrane according to claim 5 wherein after said polymerization said polymer is washed several times with hot water.
7. A membrane according to claim 5 where said polymer is washed several times with a zinc solution.
8. A semi-permeable membrane useful for separating $CO_2$ from a gaseous mixture containing $CO_2$ and $CH_4$ prepared from a polymer prepared by contacting bis(p-chlorophenyl) sulfone, sodium sulfide, and N-methyl-2 pyrrolidone under suitable polymerization onditions, where the polymerization temperature is from about 180-220 °C, and the resulting polymer is washed several times with hot water.

9. A membrane according to claim 8 where sodium acetate is an additional ingredient in the polymer preparation.

10. A gas separation process whereby a gaseous mixture containing $CO_2$ and $CH_4$ is pressure fed into contact with one side of a membrane of claim 1 under conditions such that $CO_2$ selectively passes through the membrane.

11. A process according to claim 10 wherein said gaseous mixture includes at least one compound selected from the group consisting of acetic acid, butyl amine, ethyl acetate, methyl ethyl ketone, toluene and methanol.

12. A process according to claim 11 wherein said membrane is formed from an amorphous polymer consisting essentially of poly-paraphenylene sulfide sulfone.

13. A process according to claim 12 wherein said amorphous polymer is prepared by contacting (p-chlorophenyl) sulfone, sodium sulfide, and N-methyl-2-pyrrolidone under suitable polymerization conditions.

14. A process according to claim 13 wherein the polymer of said membrane consists of poly-paraphenylene sulfide sulfone.

15. A process according to claim 13 wherein said membrane comprises a blend of poly-para-phenylene sulfide sulfone and a brominated poly(phenylene oxide).

16. A gas separation process comprising bringing a multi-component gaseous mixture into contact with one side of a semi-permeable membrane consisting essentially of a polymer having repeating units of the formula $\{S\text{-}Ar\text{-}SO_2\text{-}Ar\}$

wherein each Ar is an arylene radial 6 Co 24 carbon atoms, under condition sufficient to cause at least one of components of said multi-component gaseous mixture to pass through said membrane more readily than at least one other of the components of said multi-component gaseous mixture, said gaseous mixture containing at least one component selected from the group consisting of acetic acid, butyl amine, ethyl acetate, methyl ethyl ketone, toluene, and methanol.

17. A process according to claim 16 wherein said gaseous mix comprises $CO_2$ and $CH_4$ and $CO_2$ passes more readily through said membrane than does $CH_4$.

18. A process according to claim 17 wherein said membrane is a substantially linear amorphous para-phenylene sulfide sulfone polymer.

19. A process according to claim 16 wherein said membrane is a substantially linear amorphous para-phenylene sulfide sulfone polymer.

20. A process according to claim 19 wherein the polymer of said membrane consists of para-phenylene sulfide sulfone homopolymer.

European Patent Office

# EUROPEAN SEARCH REPORT

Application Number

EP 90 11 7066

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 774 276 (R.L. BOBSEIN)<br>* Abstract; claims 1,4,10,23-27; column 1, lines 12-15 * | 1-9 | B 01 D 71/66<br>B 01 D 53/22 //<br>C 08 G 75/02 |
| A | EP-A-0 089 175 (STANDARD OIL CO.)<br>* Abstract; claims 1,10 * | 1,10,16 | |
| A | PATENT ABSTRACTS OF JAPAN, vol. 13, no. 21 (C-560)[3369], 18th January 1989;<br>& JP-A-63 225 636 (TORAY IND. INC.) 20-09-1988<br>* Abstract * & DATABASE WPIL, AN = 88-304895, Derwent Publications Ltd, London, GB | 1-9 | |
| A | GB-A-2 100 181 (MONSANTO CO.)<br>* Abstract; claims 1,15; page 3, line 3 - last line; page 10, line 56 - page 11, line 1 * | 1,10,16 | |
| A | EP-A-0 135 941 (UNION CARBIDE CORP.)<br>* Abstract; claims 1,9; page 6, line 4 - page 7, line 12 * | 1 | |
| A | EP-A-0 330 187 (ASAHI GLASS CO.)<br>* Abstract; claims 1-14; page 7, lines 43-47; example 1 * | 1,3 | TECHNICAL FIELDS SEARCHED (Int. Cl.5) |
| P,A | WO-A-9 003 210 (TORAY IND. INC.)(05-04-1990)<br>* Abstract * | 1-9 | B 01 D |

The present search report has been drawn up for all claims

| Place of search | Date of completion of search | Examiner |
|---|---|---|
| The Hague | 13 December 90 | HOORNAERT P.G.R.J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document